# EUROPÄISCHE PATENTSCHRIFT

(11) **EP 3 862 495 B1**
(45) Veröffentlichungstag und Bekanntmachung des Hinweises auf die Patenterteilung: **08.11.2023**
(21) Anmeldenummer: 21154969.6
(22) Anmeldetag: 03.02.2021
(51) Int. Cl.: E03C 1/02, F16L 57/00

(54) **SYSTEM, DICHTHÜLSE UND VERFAHREN ZUR VORBEREITUNG EINER MONTAGE EINER WASSERLEITUNG**
SYSTEM, SEALING SLEEVE AND METHOD FOR PREPARING AN ASSEMBLY OF A WATER PIPE
SYSTÈME, MANCHON D'ÉTANCHÉITÉ ET PROCÉDÉ DE PRÉPARATION D'UN MONTAGE D'UNE CONDUITE D'EAU

(30) Priorität: 06.02.2020 DE 102020103014
(43) Veröffentlichungstag der Anmeldung: 11.08.2021
(73) Patentinhaber: Viega Technology GmbH & Co. KG, 57439 Attendorn (DE)
(72) Erfinder: Dasbach, Philipp, 57072 Siegen (DE); Sinoplu, Sudi, 57439 Attendorn (DE); Friedrich, Jan-Alexander, 57489 Drolshagen (DE); Michel, Björn, 45276 Essen (DE)
(74) Vertreter: Cohausz & Florack

(56) Entgegenhaltungen:
- EP-A1- 1 493 871
- EP-A1- 1 555 350
- EP-A1- 3 375 940
- DE-A1- 2 412 767
- KR-B1- 100 992 051

## Beschreibung

Die Erfindung betrifft ein System und eine Dichthülse zur Vorbereitung einer Montage einer Wasserleitung im Bereich einer Durchführung durch eine Vorwand, wobei ein Anschlussstutzen zum Anschluss der Wasserleitung vorgesehen ist. Die Erfindung betrifft auch ein Verfahren zur Montage der vorgenannten Teile.

Wasserleitungen zur Versorgung von Zapfstellen wie z. B. Wasserhähne oder dergleichen werden heutzutage regelmäßig als Leitungen zwischen einer Wand und einer Vorwand ausgeführt. Bevor die Leitungen mit Gipskartonplatten verkleidet werden, wird an dem Leitungsnetz üblicherweise ein Drucktest durchgeführt, um mögliche Leckagen an Leitungsverbindungsstellen zu orten und die Leckagestelle durch eine geeignete Maßnahme, z. B. durch dichtendes Verpressen eines Pressfittings, zu beseitigen.

Dasselbe Problem ergibt sich bei einer Montage einer Leitung, die an einem Anschlussstutzen angeschlossen werden soll, der in einer in einer Wand eingebrachten Vertiefung angeordnet ist und wobei die Wand anschließend mit Fliesen belegt werden soll. Auch hier muss ein Abstand zwischen dem Anschlussstutzen und der Wandebene der Fliesen überbrückt werden.

Für den Drucktest wird der für die jeweilige Zapfstelle vorgesehene Anschlussstutzen mit einem Dichtstopfen verschlossen. Der Dichtstopfen - auch als Baustopfen bezeichnet - steht über eine anschließend hergestellte Abdichtungsebene im Bereich der Vorwand hinaus soweit in den Raum vor, dass auf den Dichtstopfen eine Dichtmanschette, beispielsweise eine Dehnzonenmanschette, aufgezogen werden kann. Die Dichtmanschette dichtet den Dichtstopfen gegenüber der Vorwand ab und wird anschließend mit Fliesen oder Naturstein, erforderlichenfalls unter Zwischenanordnung einer Dichtfolie, dichtend abgedeckt.

Nachdem der Fliesen- oder Natursteinbelag fertiggestellt ist, wird der Dichtstopfen (Baustopfen) entfernt und eine Leitungsverlängerung, die auch als Hahnverlängerung bezeichnet wird, an dem Anschlussstutzen angeschlossen. Die Leitungsverlängerung wird meist so gewählt, dass sie im montierten Zustand an der Außenseite des Fliesen- oder Natursteinbelages bündig abschließt oder nahe an der Außenseite endet. Dabei besteht jedoch das Problem, dass eine möglicherweise undichte Verbindung der Leitungsverlängerung mit dem Anschlussstutzen nicht unmittelbar bemerkt wird und austretendes Leckagewasser zu Schäden in der Wand bzw. Vorwand führen kann.

Nach DIN 18534-3 besteht die Pflicht in Nasszellen, eine dichte Verbindung zwischen Trinkwasserleitung und Wand herzustellen. Diese Abdichtung ist - wie beschrieben - Aufgabe des Fliesenlegers.

Weiterhin ist der Einsatz von Dichthülsen bekannt, die zwischen dem Anschlussstutzen und der Vorwand angeordnet sind und abdichtend den Zwischenraum zwischen Wand und Vorwand überbrücken. Die Dichthülse dichtet auf der Innenseite zur Wandscheibe und auf der Außenseite zur Vorwand. Dabei werden häufig Dehnzonenmanschetten eingesetzt, die auf der Dichthülse angeordnet werden und die Dichthülse zur Vorwand abdichten.

Die beschriebenen Dichthülsen sollen sicherstellen, dass die Dehnzonenmaschnette bei der Installation der Wasserleitung nicht beschädigt wird. Die Montage der Dichthülsen erfolgt jedoch vor oder mit dem Dichtstopfen, so dass die Dichthülsen bei der Dichtheitsprüfung eine ausreichende Kontrolle der Verbindung der Dichtstopfen mit den Anschlussstutzen verhindern. Zudem bieten die Dichthülsen keine Stabilisierung für Wasserleitungen in Form von Hahnverlängerungen oder S-Bögen, so dass Sanitärarmaturen bei der Anwendung wackeln können. Außerdem ist eine Wärmedämmung schwierig aufzubringen.

Bei einer konventionellen Installation wird keine Hülse verwendet. Es wird ein Baustopfen für die Dichtigkeitsprüfung und zum Schutz der Leitung montiert. Der Fliesenleger dichtet mit einer Dehnzonenmanschette auf dem Baustopfen ab und verlegt die Fliesen. Da keine Dichthülse verwendet wird, muss nach dem Herausschrauben des Baustopfens, die Dehnzonenmanschette direkt auf der Hahnverlängerung dichten. Die verbleibenden Spalte werden anschließend mit Silikon aufgefüllt.

Die KR 100 992 051 B1 offenbart eine Konstruktion eines Dichtstopfens 40 für eine Winkelkupplung für den Anschluss einer Wasserleitung mit einer Schutzhülse.

Die DE 24 12 767 A1 betrifft einen Unterputz-S-Anschluss für sanitäre Mischbatterien und Armaturen zum Anschluss an einen in der Wand liegenden Fitting mit einem Außengewinde-Anschlussstutzen und einem Stopfen zur Druckprobe.

Die EP 1 555 350 A1 beschreibt eine Montageplatte zur Montage eines Fittings einer Wasserleitung in einer Wand sowie einen Dichtstopfen, der an seinen Enden jeweils Außengewinde aufweist und der so in ein Fitting mit Innengewinde eingeschraubt werden kann.

Die EP 1 493 871 A1 betrifft eine Montageschiene zum Positionieren von Anschlussarmaturen beim Einmauern. Von der Vorderseite der Montageschiene wird ein Gewindestopfen in einen Anschlussstutzen eingeschraubt und auf diesen eine Schutzhülse aufgeschraubt. Nach der Erstellung des Wandaufbaus werden der Stopfen und die Schutzhülse entfernt, ein Kupplungsstück eingeschraubt und die Sanitärarmatur angeschlossen.

In der EP 3 375 940 A1 ist ein Verfahren zum Anschließen einer Wasserleitung an den Anschlussstutzen eines Unterputzrohres beschrieben. Der Anschlussstutzen weist ein Innengewinde auf, in das ein Baustopfen mittels eines Metallgewindeeinlegers eingeschraubt wird. Eine Dichtung ist vorgesehen zur Abdichtung zwischen dem Baustopfen und dem Anschlussstutzen. Eine Dichthülse weist an einem axialen Ende einen Montageabschnitt auf, mit dem sie umfänglich geschlossen wasserdicht abdichtend an dem Anschlussstuten angeordnet ist.

Daher liegt der vorliegenden Erfindung das technische Problem zugrunde, die bekannten Systeme und deren Installation weiter zu verbessern und zu vereinfachen.

Das zuvor aufgeführte technische Problem wird erfindungsgemäß zunächst durch ein System zur Vorbereitung einer Montage einer Wasserleitung an einem Anschlussstutzen im Bereich einer Durchführung durch eine Wandschicht, insbesondere Vorwand gelöst mit einem Dichtstopfen zum temporären wasserdichten Verschließen des Anschlussstutzens und mit einer auf dem Anschlussstutzen abdichtend montierbaren Dichthülse, wobei die Dichthülse zumindest abschnittsweise einen Innendurchmesser größer als der Außendurchmesser des Dichtstopfens aufweist, wobei der Dichtstopfen an dem dem Anschlussstutzen zugewandten Ende ein Außengewinde zum Einschrauben in ein Innengewinde des Anschlussstutzens aufweist und wobei die Dichthülse ein Dichtmittel zur dichtenden Anlage an der Außenseite des Anschlussstutzens aufweist, wobei der Dichtstopfen an dem dem Anschlussstutzen abgewandten Ende ein Außengewinde aufweist und wobei die Dichthülse an dem dem Anschlussstutzen abgewandten Ende ein Innengewinde passend zum Außengewinde des Dichtstopfens aufweist.

Unter einer Wandschicht wird insbesondere eine Vorwand verstanden, die mit einem vorgegebenen Abstand vor der Wand mit dem installierten Anschlussstutzen aufgebaut wird und die anschließend mit Fliesen oder dergleichen belegt wird. Dabei wird erfindungsgemäß der Abstand zwischen der Wand und der Vorwand durch das erfindungsgemäße System überbrückt. Die Wandschicht kann aber auch eine Schicht aus Fliesen oder dergleichen sein, die direkt auf der Wand angebracht wird. In diesem Fall ist der Anschlussstutzen in einer Vertiefung innerhalb der Wandfläche befestigt und der Abstand vom Anschlussstutzen bis zur Ebene der Fliesen wird durch das erfindungsgemäße System überbrückt. Im Folgenden wird die Erfindung hauptsächlich anhand der am häufigsten eingesetzten Ausgestaltung der Wandschicht als Vorwand beschrieben, die Erfindung ist aber nicht darauf beschränkt.

Der Anschlussstutzen kann entweder direkt aus der Wand herausragen, wenn die Zuleitung im Mauerwerk verläuft, oder der Anschlussstutzen ist Teil einer Wandscheibe, die an der Wand befestigt ist und mit einer ebenfalls außerhalb der Wand verlaufenden Zuleitung verbindbar ist. An dem Anschlussstutzen bzw. an der Wandscheibe ist eine Zuleitung zum Zuführen von Wasser angeschlossen.

Unter einer Wasserleitung, die an den Anschlussstutzen montiert wird, wird insbesondere eine Wasserleitung zur Versorgung von Zapfstellen wie z. B. Wasserhähnen oder dergleichen als Teil von Sanitärarmaturen verstanden.

Wie im Folgenden anhand des erfindungsgemäßen Verfahrens noch weiter erläutert wird, liegt ein Vorteil des Systems darin, dass der Dichtstopfen zunächst mit dem Anschlussstutzen verbunden und das Leitungssystem auf Dichtheit geprüft werden kann. Erst danach wird die Dichthülse abdichtend mit dem Anschlussstutzen mittels der Gewindeverbindung zwischen der Dichthülse und dem Dichtstopfen am vom Anschlussstutzen abgewandten Ende montiert. Somit kann trotz des Einsatzes einer Dichthülse das Leitungssystem vom Installateur ohne eine vorher montierte Dichthülse geprüft werden.

Weiterhin kann eine Dämmhülse für ein zumindest abschnittsweises Umgreifen der Dichthülse und ggf. eines Teils des Anschlussstutzens bzw. der Wandscheibe vorgesehen sein. Somit werden das montierte System und der Anschlussstutzen im Bereich zwischen der Wand und der Vorwand gegen eine zu starke Erwärmung oder Abkühlung geschützt. Zusätzlich kann dann auch eine Wärmedämmung auf der Zuleitung zum Anschlussstutzen bzw. zur Wandscheibe installiert sein.

Des Weiteren kann der Dichtstopfen einen Schaft aufweisen, wobei der Schaft mit einem Außengewinde zum Einschrauben in ein Innengewinde des Anschlussstutzen ausgebildet ist. Das Außengewinde ist am Schaft ausgebildet und an dem dem Anschlussstutzen zugewandten Ende angeordnet. Weiterhin kann eine Dichtung für eine Abdichtung mit dem Anschlussstutzen vorgesehen sein, wobei der Schaft an dem dem Anschlussstutzen abgewandten Ende ein Außengewinde für die Befestigung einer Dichthülse aufweist.

Das oben aufgezeigte technische Problem wird des Weiteren durch eine Dichthülse für die Vorbereitung einer Montage einer Wasserleitung an einem Anschlussstutzen im Bereich einer Durchführung durch eine Wandschicht, insbesondere Vorwand gelöst mit einer innen hohl ausgestalteten Hülse und mit einem Dichtmittel zur dichtenden Anlage an der Außenseite des Anschlussstutzens, wobei die Hülse an dem dem Anschlussstutzen abgewandten Ende ein Innengewinde passend zum Außengewinde eines Dichtstopfens aufweist.

Das oben aufgezeigte technische Problem wird schließlich auch durch ein Verfahren zur Vorbereitung einer Montage einer Wasserleitung an einem Anschlussstutzen im Bereich einer Durchführung durch eine Wandschicht, insbesondere Vorwand mit einem der zuvor beschriebenen Systemen gelöst, bei dem der Dichtstopfen in den Anschlussstutzen eingeschraubt wird, bei dem eine Dichtheitsprüfung der Leitungsanordnung einschließlich einer Wandscheibe vorgenommen wird und bei dem die Dichthülse auf den Anschlussstutzen abdichtend aufgeschoben und zumindest abschnittsweise mit dem Dichtstopfen verschraubt wird.

Vorzugsweise wird anschließend eine Wandschicht, insbesondere eine Vorwand hergestellt, wobei die Dichthülse und der Dichtstopfen aus einer Öffnung in der Vorwand herausragen, wobei der herausragende Abschnitt der Dichthülse zusammen mit dem Dichtstopfen entfernt, insbesondere abgeschnitten werden und wobei innerhalb der Dichthülse die Wasserleitung in den Anschlussstutzen eingeschraubt wird.

In vorteilhafter Weise wird die Wasserleitung in der Dichthülse zumindest abschnittsweise anliegend angeordnet. Dadurch wird die Anschlussleitung in ihrer Position stabilisiert, wodurch auch eine angeschlossene Sanitärarmatur stabiler montiert werden kann.

Weiterhin kann eine Dehnzonenmanschette auf der Dichthülse abdichtend angeordnet werden, um die Dichthülse gegenüber der Vorwand abzudichten.

Des Weiteren kann auf zumindest ein Teil der Dichthülse und ggf. ein Teil des Anschlussstutzens von einer Dämmhülse umgriffen werden. Diese erstreckt sich bevorzugt bis durch die Vorwand hindurch und wird nach der Installation der Vorwand vor der Anbringung von Fliesen abgeschnitten.

Somit wird im ersten Schritt der Dicht- bzw. Baustopfen an dem Anschlussstutzen, beispielsweise einer Wandscheibe montiert. Der Baustopfen verschließt den Anschlussstutzen, indem die Dichtung, beispielsweise eine Flachdichtung stirnseitig auf dem Anschlussstutzen abdichtet. Anschließend führt der Installateur die Dichtheitsprüfung durch und hat währenddessen die Möglichkeit die Dichtstelle zwischen Baustopfen und Wandscheibe zu prüfen, da diese frei zugänglich ist.

Danach wird die Dichthülse über den Dichtstopfen auf den Anschlussstutzen geschoben, bis das Innengewinde der Dichthülse in das entsprechende Außengewinde des Dichtstopfens greift und weiter aufgeschraubt wird, bis die Dichthülse einen Anschlag an dem Anschlussstutzen findet. Der Installateur kann bei Bedarf nun eine Wärmedämmung auf dem Anschlussstutzen, gegebenenfalls auch auf der Wandscheibe inkl. Dichthülse aufbringen, die anschließend vom Fliesenleger dem Wandaufbau entsprechend gekürzt wird.

Vorzugsweise dichtet eine Dehnzonenmanschette außen auf der Dichthülse ab. Die bevorzugt vorhandene Wärmedämmung endet hierbei vor der Dehnzonenmanschette. Das Dichtmittel, vorzugsweise eine Gummidichtung, in der Dichthülse dichtet diese gegen den Anschlussstutzen und gegebenenfalls gegen die Wandscheibe ab. Während der Arbeiten des Fliesenlegers sorgt die Arretierung der Dichthülse über das Gewinde gegenüber dem Dichtstopfen dafür, dass der Fliesenleger diese nicht verschieben kann und die Dichthülse somit korrekt auf dem Anschlussstutzen bzw. auch auf der Wandscheibe positioniert bleibt.

Nachdem der Fliesenleger seine Arbeit beendet hat, schneidet der Installateur für das Anbringen einer Sanitärarmatur die Dichthülse entsprechend der Lage der Fliesen an einer der Sollbruchstellen ab. Dazu weist die Dichthülse in bevorzugter Weise umlaufende und beabstandete Sollbruchstellen auf, die ein Auftrennen der Dichthülse erleichtern. Der Dichtstopfen kann nun aus dem abgeschnittenen Teil der Dichthülse herausgeschraubt werden. Anschließend wird eine passende Wasserleitung, insbesondere eine Hahnverlängerung montiert, an die dann die Sanitärarmatur angeschlossen werden kann. Die Dichthülse ist so ausgelegt, dass Wasserleitung, insbesondere die Hahnverlängerung nach DVGW GW393 eng anliegend in der Dichthülse sitzt, so dass die Dichthülse die Wasserleitung bzw. Hahnverlängerung stabilisiert und ein mögliches Spiel der Sanitärarmatur verringert.

Ein Vorteil des beschriebenen Systems und des beschriebenen Verfahrens besteht darin, dass die Dichthülse nach dem Baustopfen montiert werden kann. Somit kann die Dichtheitsprüfung zunächst durchgeführt werden und anschließend wird erst die Dichthülse montiert. Das Gewinde in der Dichthülse erlaubt eine definierte Montage auf dem Dichtstopfen und fixiert die Dichthülse während der Arbeiten des Fliesenlegers. Die Dichthülse ist so gestaltet, dass eine zusätzliche Wärmedämmung für Kalt- oder Warmwasser leicht angebracht werden kann.

Im Folgenden wird die Erfindung anhand von Ausführungsbeispielen mit Bezug auf die Zeichnung erläutert. In der Zeichnung zeigen
- Fig. 1 bis 5: ein erstes Ausführungsbeispiel eines erfindungsgemäßen Systems sowie eines Verfahrens zur Vorbereitung einer Montage einer Wasserleitung im Bereich einer Durchführung durch eine Vorwand und
- Fig. 6 bis 9: ein zweites Ausführungsbeispiel eines erfindungsgemäßen Systems sowie eines Verfahrens zur Vorbereitung einer Montage einer Wasserleitung im Bereich einer Durchführung durch eine Vorwand mit einer zusätzlichen Dämmhülse.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

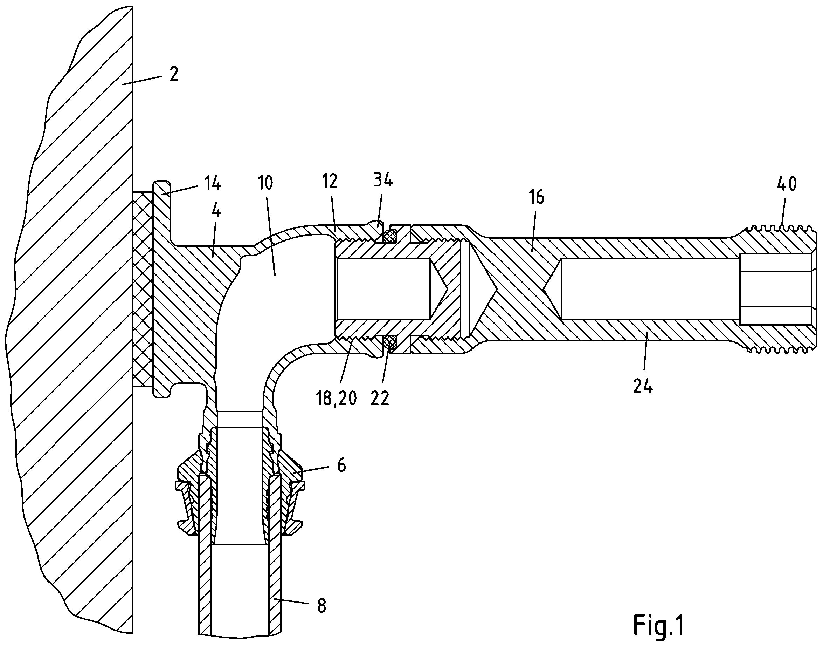

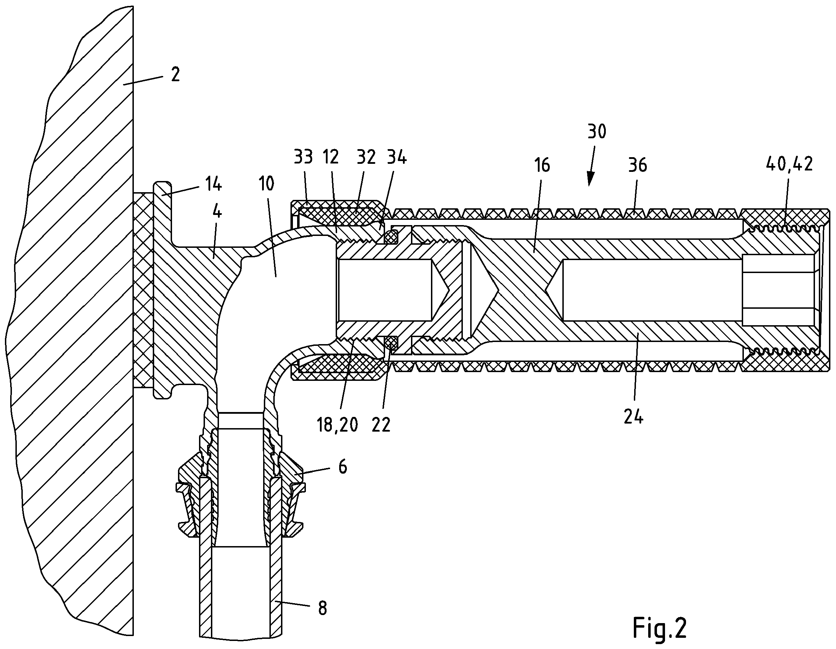

In den Fig. 1 und 2 ist zunächst ein erfindungsgemäßes System zur Vorbereitung einer Montage einer Wasserleitung im Bereich einer Durchführung durch eine Vorwand gezeigt. Die Vorwand ist eine bevorzugte Ausgestaltung einer Wandschicht, die auch als eine Schicht aus einer auf einer Wand befestigten Fliesen oder dergleichen bestehen kann. Im Folgenden werden die Beispiele anhand einer Vorwand erläutert, die Erfindung ist aber nicht auf die Ausgestaltung einer Vorwand beschränkt.

Zunächst ist in den Fig. 1 und 2 eine Wand 2 zu erkennen, die aus Mauerwerk besteht und Teil eines Badezimmers oder einer Toilette sein kann. An der Wand 2 ist eine insgesamt als Wandscheibe 4 bezeichnete Anordnung mit einem über einen Fitting 6 angeschlossenen Zulaufrohr 8, einem Rohrwinkel 10 mit einem Anschlussstutzen 12 zum Anschluss der Wasserleitung und mit einer Befestigungsplatte 14 befestigt. Die dazu notwendigen Befestigungsmittel wie Schrauben und Dübel sind nicht dargestellt. Der Anschlussstutzen 12 ist für einen Anschluss einer weiteren Wasserleitung zum Anschließen einer Armatur, bevorzugt Sanitärarmatur geeignet, wie im Folgenden noch dargelegt wird.

Gemäß Fig. 1 ist ein Dichtstopfen 16 zum temporären wasserdichten Verschließen des Anschlussstutzens 12 mit einem Außengewinde 18, das an dem dem Anschlussstutzen 12 zugewandten Ende des Dichtstopfens 16 ausgebildet ist, in ein Innengewinde 20 des Anschlussstutzen 12 eingeschraubt. Zum Abdichten ist weiterhin eine Dichtung 22 zwischen dem Dichtstopfen 16 und dem Anschlussstutzen 12 angeordnet. Der Dichtstopfen 16 weist weiterhin einen bevorzugt hohlen Schaft 24 auf, an dem das Außengewinde 18 ausgebildet ist.

In diesem Zustand, den ein Installateur herstellt, kann das Leitungssystem, zu dem die Wandscheibe 4 und die Zuleitung 8 gehören, auf Dichtheit geprüft werden. In vorteilhafter Weise ist dabei die Verbindung des Dichtstopfens 16 mit dem Anschlussstutzen 12 unmittelbar zugänglich.

Wie Fig. 2 zeigt, kann nach der Dichtigkeitsprüfung und bevor eine in den nachfolgend erläuterten Figuren gezeigte Vorwand beispielsweise in Trockenbauweise hergestellt wird, eine Dichthülse 30 auf dem Anschlussstutzen 12 angeordnet werden. Die Dichthülse 30 weist dabei zumindest entlang des Abschnitts, in dem der Dichtstopfen 16 angeordnet ist, einen Innendurchmesser größer als der Außendurchmesser des Dichtstopfens 16 auf.

Die Dichthülse 30 weist weiterhin ein Dichtmittel 32 zur dichtenden Anlage an der Außenseite des Anschlussstutzens 12 auf. Das Dichtmittel 32 ist elastisch verformbar, in einer Ausnehmung 33 der Dichthülse 30 angeordnet und hintergreift einen umlaufenden Vorsprung 34 des Anschlussstutzens 12, so dass die Dichthülse 30 durch die zwischen dem Anschlussstutzen 12 und dem Dichtmittel 32 entstehenden Reibungskräfte positioniert wird.

Erfindungsgemäß weisen der Dichtstopfen 16 an dem dem Anschlussstutzen 12 abgewandten Ende ein Außengewinde 40 und die Dichthülse 30 an dem dem Anschlussstutzen 12 abgewandten Ende ein Innengewinde 42 passend zum Außengewinde 40 des Dichtstopfens 16 auf. Somit kann die Dichthülse 30 zunächst soweit auf den Dichtstopfen 16 aufgeschoben werden, bis die beiden Gewinde 40 und 42 in Eingriff miteinander gelangen. Anschließend wird die Dichthülse 30 weiter auf den Dichtstopfen 16 aufgeschraubt, bis die Dichthülse 30 ihre in Fig. 2 dargestellte Endposition erreicht.

Die Dichthülse 30 weist zwischen der Ausnehmung 33 und dem Außengewinde 40 eine segmentierte rohrförmige Hülse 36 auf, wobei zwischen den einzelnen Segmenten Sollbruchstellen für ein späteres Kürzen der Dichthülse 30 ausgebildet sind.

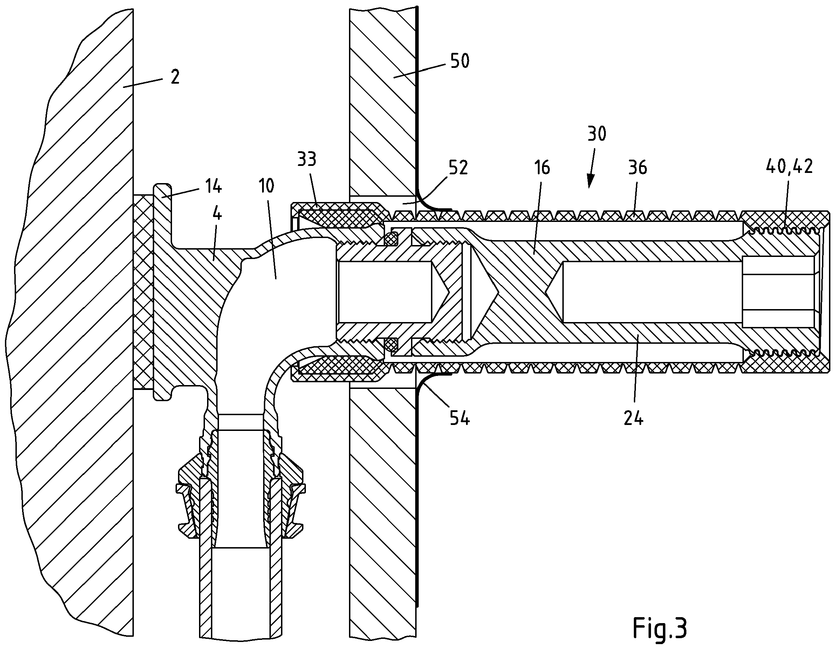

In den Fig. 3 bis 5 werden die weiteren Schritte des Montierens einer Wasserleitung an dem Anschlussstutzen 12 im Bereich einer Durchführung durch eine Vorwand erläutert.

In Fig. 3 ist eine Vorwand 50 dargestellt, die nach der Dichtigkeitsprüfung der Wandscheibe 4 und nach dem Aufsetzen bzw. Aufschrauben der Dichthülse 30 auf den Anschlussstutzen 12 gebaut worden ist. Der Dichtstopfen 16 und die Dichthülse 30 erstrecken sich durch eine in der Vorwand 50 ausgebildete Öffnung 52. Für ein Abdichten der Vorwand 50 im Bereich der Öffnung 52 ist eine Dehnzonenmanschette 54 auf die Dichthülse 30 aufgeschoben worden, die eng an der Außenseite der Dichthülse 30 und radial nach außen verlaufend an der Vorwand 50 anliegt.

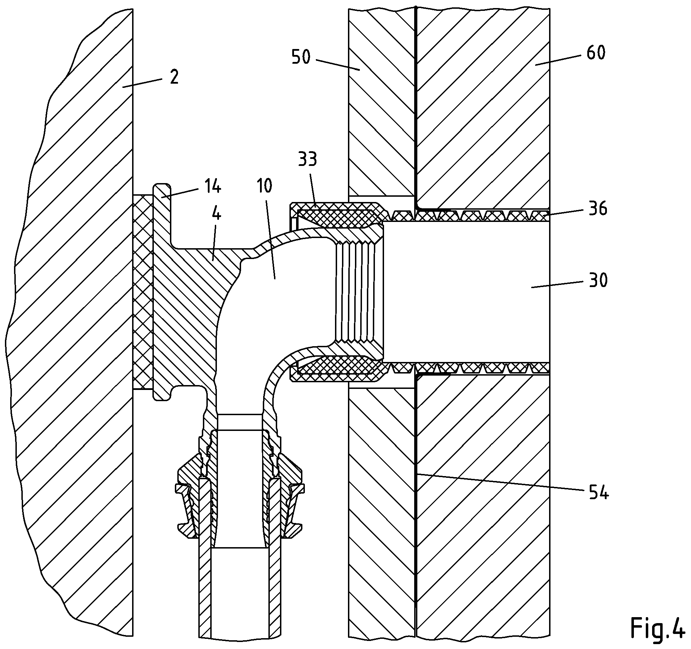

In Fig. 4 ist der Zustand nach einem Abschneiden der aus der Vorwand herausragenden Abschnitte der Dichthülse 30 gezeigt. Dazu ist in bevorzugter Weise eine Sollbruchstelle zwischen zwei einzelnen Segmenten der Hülse 36 genutzt worden. Nach dem Durchtrennen der Hülse 36 konnten der abgeschnittene Teil der Dichthülse 30 abgenommen und der damit verschraubte Dichtstopfen 16 aus dem Innengewinde des Anschlussstutzens 12 abgeschraubt werden.

Des Weiteren ist eine Schicht mit Fliesen 60 angebracht worden. Durch eine Öffnung in der dargestellten Fliese 60 erstrecken sich der verbliebene Abschnitt der Dichthülse 30, deren vorderes Ende bündig mit der Oberfläche der Fliese 60 abschließt.

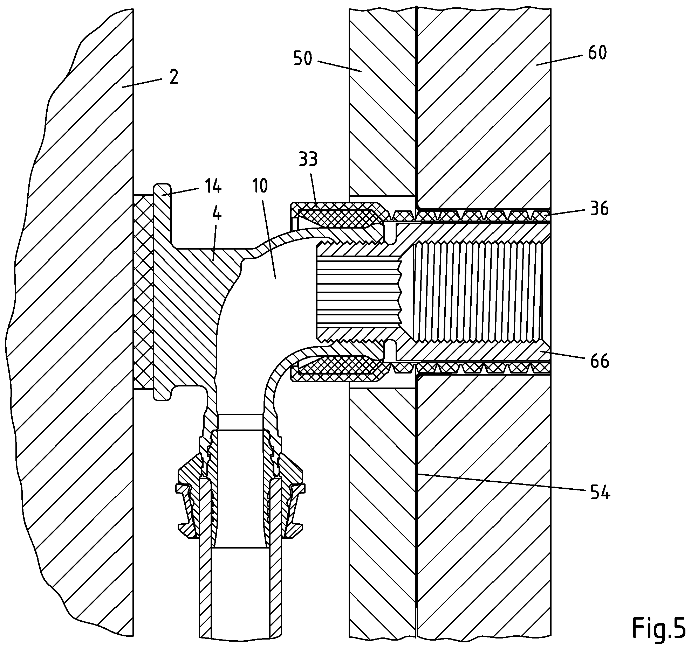

Fig. 5 zeigt den fertigen Zustand, bei dem innerhalb der Dichthülse 30 eine Wasserleitung 66 in den Anschlussstutzen 12 eingeschraubt worden ist. Die Wasserleitung 66 dient dem Anschließen beispielsweise einer Armatur, insbesondere einer Sanitärarmatur (nicht dargestellt) und weist einen Außendurchmesser auf, der an den Innendurchmesser der Hülse 36 angepasst ist. Somit liegt die Wasserleitung 66 innen an der Dichthülse 30 an und wird dadurch stabilisiert.

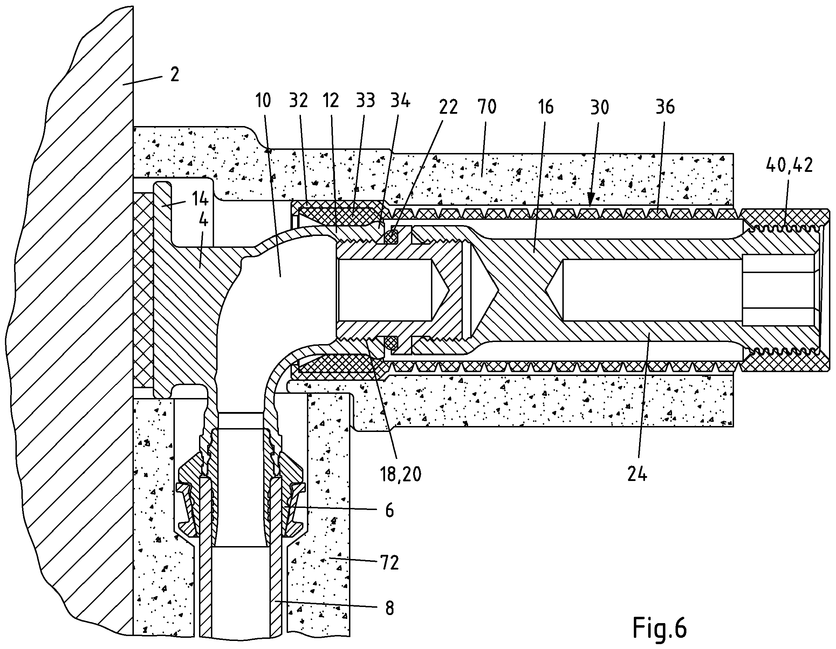

Bei dem in den Fig. 6 bis 9 gezeigten Ausführungsbeispiel sind der gleiche Dichtstopfen 16 und die gleiche Dichthülse 30 vorhanden. Zusätzlich zu diesen Bauteilen ist eine Dämmhülse 70 für ein zumindest abschnittsweises Umgreifen der Dichthülse 30 und eines Teils der Wandscheibe 4 vorgesehen. Die Dämmhülse 70 wird nach dem Aufsetzen auf den Anschlussstutzen 12 durch ein Aufschrauben der Dichthülse 30 auf den Dichtstopfen 16 übergestülpt, wie sich aus Fig. 6 ergibt. Des Weiteren ist eine Wärmedämmung 72 um die Zuleitung 8 herum angeordnet.

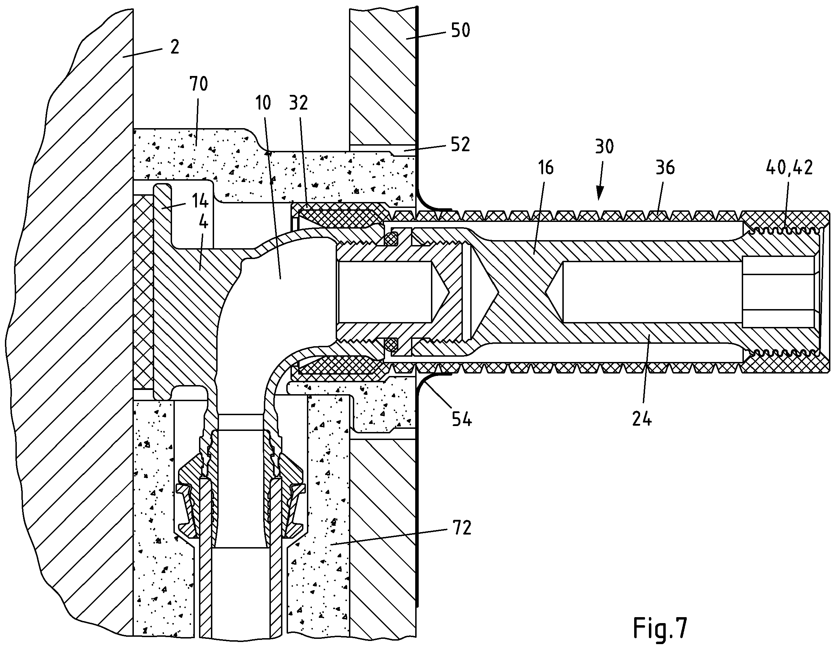

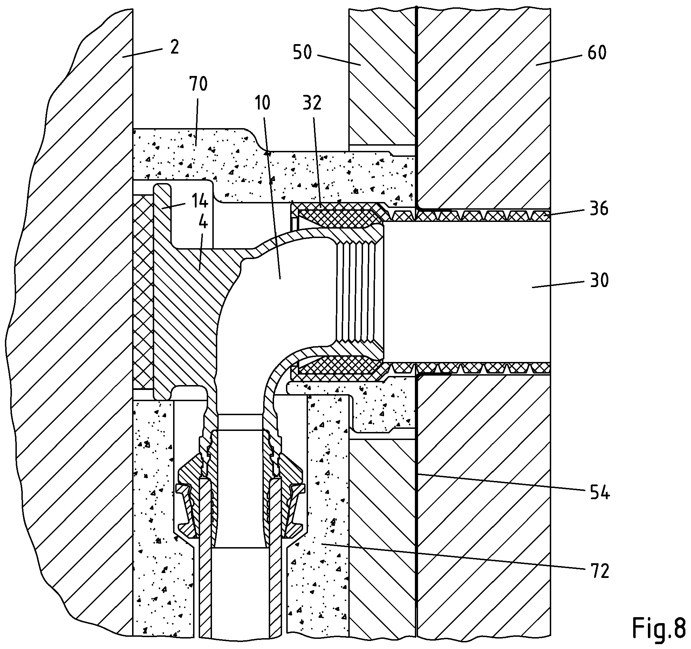

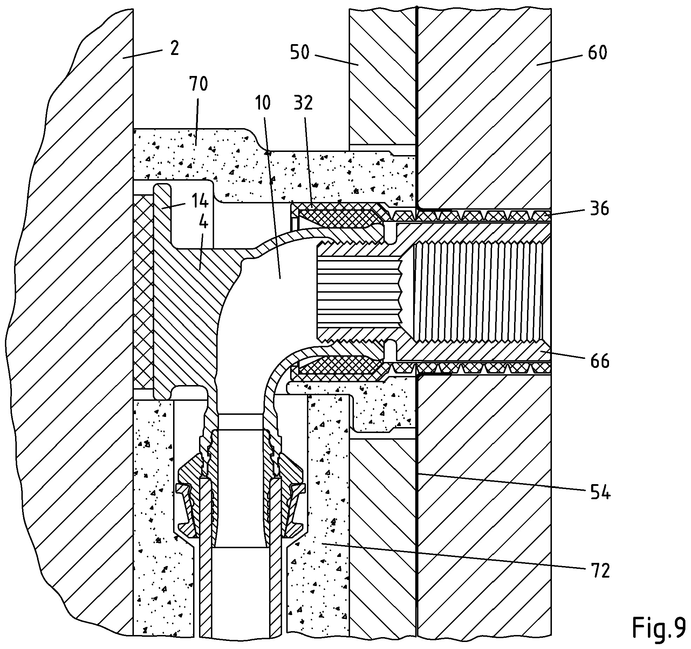

Nach dem Aufbau der Vorwand 50 wird die Dämmhülse 70 bündig abgeschnitten, wie Fig. 7 zeigt. Die Fliese 60 verdeckt dann die Dämmhülse 70 und umgibt die Dichthülse 30 zusammen mit der Dehnzonenmanschette 54, wie sich aus Fig. 8 ergibt. Gemäß Fig. 9 ist dann eine Wasserleitung 66 in die Anordnung eingeschraubt, wie bereits im Zusammenhang mit Fig. 5 beschrieben worden ist.

Der in den vorangehend beschriebenen Beispielen eingesetzte Dichtstopfen 16 kann beispielsweise aus einem Metallnippel, insbesondere einem Messingnippel mit einem 1/2"-Gewinde zum Einschrauben in den Anschlussstutzen 12 mit einer Flachdichtung aus einem elastomeren Material, beispielweise Gummi bestehen. Der Messingnippel kann zusätzlich von einem Kunststoffkörper (nicht dargestellt) umhüllt sein, der die aufzusetzende Dichthülse 30 stabilisiert. Der Dichtstopfen 16 besitzt ein 3/4"-Außengewinde 40 für die Aufnahme der Dichthülse 30. Für die Montage des Dichtstopfens 16 kann an dem Ende mit dem Außengewinde 40 ein Innenmehrkant vorgesehen sein, der mit einem handelsüblichen Werkzeug gedreht werden kann.

Die Dichthülse 30 besteht bevorzugt aus einem harten Kunststoff und weist ein Dichtmittel 32 ebenfalls aus einem elastomeren Material, insbesondere aus Gummi auf. In der Dichthülse 30 sind Sollbruchsstellen zum Kürzen auf die der Vorwand 50 mit Fliesen 60 entsprechenden Länge vorgesehen. Das Innengewinde der Dichthülse 30 ist dann ebenfalls 3/4" Gewinde zum Aufschrauben auf den Dichtstopfen 16 mit dem Außengewinde 40. Das Aufschrauben der Dichthülse 30 kann durch einen Außenmehrkant und mit einem Werkzeug erleichtert werden. Der Gewindeabschnitt wird beim Kürzen der Dichthülse 30 entfernt.

## Patentansprüche

1. System zur Vorbereitung einer Montage einer Wasserleitung im Bereich einer Durchführung durch eine Wandschicht, insbesondere Vorwand, wobei ein Anschlussstutzen (12) zum Anschluss der Wasserleitung vorgesehen ist,
- mit einem Dichtstopfen (16) zum temporären wasserdichten Verschließen des Anschlussstutzens (12) und
- mit einer auf dem Anschlussstutzen (12) abdichtend montierbaren Dichthülse (30),
- wobei die Dichthülse (30) zumindest abschnittsweise einen Innendurchmesser größer als der Außendurchmesser des Dichtstopfens (16) aufweist,
- wobei der Dichtstopfen (16) an dem dem Anschlussstutzen (12) zugewandten Ende ein Außengewinde (18) zum Einschrauben in ein Innengewinde (20) des Anschlussstutzen (12) aufweist und
- wobei die Dichthülse (30) ein Dichtmittel (32) zur dichtenden Anlage an der Außenseite des Anschlussstutzens (12) aufweist, und
- wobei der Dichtstopfen (16) an dem dem Anschlussstutzen (12) abgewandten Ende ein Außengewinde (40) aufweist,
**dadurch gekennzeichnet,**
- **dass** die Dichthülse (30) an dem dem Anschlussstutzen (12) abgewandten Ende ein Innengewinde (42) passend zum Außengewinde (40) des Dichtstopfens (16) aufweist.

2. System nach Anspruch 1,
**dadurch gekennzeichnet,**
**dass** eine Dämmhülse (70) für ein zumindest abschnittsweises Umgreifen der Dichthülse (30) und ggf. eines Teils des Anschlussstutzens (12) vorgesehen ist.

3. System nach Anspruch 1 oder 2,
**dadurch gekennzeichnet,**
- **dass** der Dichtstopfen (16) einen Schaft (24) aufweist, an dem das Außengewinde (18) zum Einschrauben in das Innengewinde (20) des Anschlussstutzens (12) ausgebildet ist,
- **dass** der Dichtstopfen (16) eine Dichtung (22) für eine Abdichtung mit dem Anschlussstutzen (12) aufweist, und
- **dass** der Schaft (24) an dem dem Anschlussstutzen (12) abgewandten Ende das Außengewinde (40) für die Befestigung der Dichthülse (30) aufweist.

4. Dichthülse für die Vorbereitung einer Montage einer Wasserleitung an einem Anschlussstutzen im Bereich einer Durchführung durch eine Wandschicht, insbesondere Vorwand,
- mit einer innen hohl ausgestalteten Hülse (36) und
- mit einem Dichtmittel (32) zur dichtenden Anlage an der Außenseite des Anschlussstutzens (12),
**dadurch gekennzeichnet,**
- **dass** die Hülse (36) an dem dem Anschlussstutzen (12) abgewandten Ende ein Innengewinde (42) passend zum Außengewinde (40) eines Dichtstopfens (16) aufweist.

5. Verfahren zur Vorbereitung einer Montage einer Wasserleitung an einem Anschlussstutzen im Bereich einer Durchführung durch eine Wandschicht, insbesondere Vorwand, mit einem System nach Ansprüche 1 bis 3,
- bei dem der Dichtstopfen in den Anschlussstutzen eingeschraubt wird,
- bei dem eine Dichtheitsprüfung der Leitungsanordnung einschließlich einer Wandscheibe vorgenommen wird und
- bei dem die Dichthülse auf den Anschlussstutzen abdichtend aufgeschoben und zumindest abschnittsweise mit dem Dichtstopfen verschraubt wird.

6. Verfahren nach Anspruch 5,
- bei dem eine Wandschicht, insbesondere Vorwand hergestellt wird, wobei die Dichthülse und der Dichtstopfen aus einer Öffnung in der Wandschicht, insbesondere Vorwand herausragen,
- bei dem der herausragende Abschnitt der Dichthülse zusammen mit dem Dichtstopfen entfernt werden und
- bei dem innerhalb der Dichthülse die Wasserleitung in den Anschlussstutzen eingeschraubt wird.

7. Verfahren nach Anspruch 6,
bei dem die Wasserleitung in der Dichthülse zumindest abschnittsweise anliegend angeordnet wird.

8. Verfahren nach einem der Ansprüche 5 bis 7,
bei dem auf zumindest ein Teil der Dichthülse und ggf. ein Teil des Anschlussstutzens von einer Dämmhülse umgriffen werden.

## Claims

1. System for preparing the installation of a water pipe in the area of a lead-through through a wall layer, in particular a front-wall, wherein a connection piece (12) is provided for connecting the water pipe,
- with a sealing plug (16) for temporary watertight sealing of the connection pipe (12) and
- with a sealing sleeve (30) that can be sealingly mounted on the connection pipe (12),
- wherein the sealing sleeve (30) has, at least in sections, an inner diameter larger than the outer diameter of the sealing plug (16),
- wherein the sealing plug (16) has, at the end facing the connection piece (12), an external thread (18) for screwing into an internal thread (20) of the connection piece (12), and
- wherein the sealing sleeve (30) comprises a sealing means (32) for sealingly engaging the outside of the connector (12), and
- wherein the sealing plug (16) has an external thread (40) at the end facing away from the connection pipe (12),
**characterised in**
- **that** the sealing sleeve (30) has an internal thread (42) at the end facing away from the connection piece (12), matching the external thread (40) of the sealing plug (16).

2. System according to claim 1,
**characterised in**
**that** an insulating sleeve (70) is provided for at least partially engaging around the sealing sleeve (30) and possibly a part of the connection piece (12).

3. System according to claim 1 or 2,
**characterised in**
- **that** the sealing plug (16) has a shaft (24) on which the external thread (18) is formed for screwing into the internal thread (20) of the connection piece (12),
- **that** the sealing plug (16) has a seal (22) for sealing with the connection piece (12), and
- **that** the shaft (24) has the external thread (40) for fastening the sealing sleeve (30) at the end facing away from the connection piece (12).

4. Sealing sleeve for preparing the installation of a water pipe on a connecting piece in the area of a lead-through through a wall layer, in particular a front-wall,
- with a sleeve (36) which is hollow on the inside and
- with a sealant (32) for sealing contact on the outside of the connection piece (12), **characterised in**
- **that** the sleeve (36) has an internal thread (42) at the end facing away from the connection piece (12), matching the external thread (40) of a sealing plug (16).

5. Method for preparing the installation of a water pipe on a connecting piece in the area of a lead-through through a wall layer, in particular a front-wall, with a system according to claims 1 to 3,
- where the sealing plug is screwed into the connection pipe,
- in which a leak test of the pipe arrangement including a wall plate is carried out and
- in which the sealing sleeve is pushed onto the connection pipe in a sealing manner and screwed to the sealing plug at least in sections.

6. Method according to claim 5,
- in which a wall layer, in particular a front-wall, is produced, the sealing sleeve and the sealing plug protruding from an opening in the wall layer, in particular front-wall,
- where the protruding section of the sealing sleeve is removed together with the sealing plug and
- in which the water pipe is screwed into the connection pipe inside the sealing sleeve.

7. Method according to claim 6,
in which the water pipe is arranged in the sealing sleeve at least in sections in contact.

8. Method according to any one of claims 5 to 7,
in which at least part of the sealing sleeve and, if necessary, part of the connection spigot are enclosed by an insulating sleeve.

## Revendications

1. Système destiné à la préparation d'un montage d'une conduite d'eau dans la zone d'un passage à travers une couche murale, en particulier une double paroi ; dans lequel on prévoit une tubulure de raccordement (12) pour le raccordement de la conduite d'eau ;
- qui comprend un bouchon d'étanchéité (16) pour la fermeture temporaire étanche à l'eau de la tubulure de raccordement (12) ; et
- qui comprend un manchon d'étanchéité (30) qui peut être monté de manière hermétique sur la tubulure de raccordement (12) ;
- dans lequel le manchon d'étanchéité (30) présente, au moins en partie, un diamètre interne supérieur au diamètre externe du bouchon d'étanchéité (16) ;
- dans lequel le bouchon d'étanchéité (16) présente, à l'extrémité tournée vers la tubulure de raccordement (12), un filet de vis externe (18) à des fins d'insertion par vissage dans un filet de vis interne (20) de la tubulure de raccordement (12) ; et
- dans lequel le manchon d'étanchéité (30) présente un agent d'étanchéité (32) pour l'application procurant une étanchéité contre le côté externe de la tubulure de raccordement (12) ; et
- dans lequel le bouchon d'étanchéité (16) présente, à l'extrémité qui se détourne de la tubulure de raccordement (12), un filet de vis externe (40) ; **caractérisé**
- **en ce que** le manchon d'étanchéité (30) présente, à l'extrémité qui se détourne de la tubulure de raccordement (12), un filet de vis interne (42) qui correspond au filet de vis externe (40) du bouchon d'étanchéité (16).

2. Système selon la revendication 1,
**caractérisé**
**en ce que** l'on prévoit un manchon d'isolation (70) destiné à entourer, au moins en partie, le manchon d'étanchéité (30) et, le cas échéant, une partie de la tubulure de raccordement (12).

3. Système selon la revendication 1 ou 2,
**caractérisé**
- **en ce que** le bouchon d'étanchéité (16) présente une tige (24) contre laquelle est réalisé le filet de vis externe (18) à des fins d'insertion par vissage dans le filet de vis interne (20) de la tubulure de raccordement (12) ;
- **en ce que** le bouchon d'étanchéité (16) présente un joint d'étanchéité (22) pour une étanchéité avec la tubulure de raccordement (12) ; et
- **en ce que** la tige (24) présente, à l'extrémité qui se détourne de la tubulure de raccordement (12), le filet de vis externe (40) pour la fixation du manchon d'étanchéité (30).

4. Manchon d'étanchéité pour la préparation d'un montage d'une conduite d'eau sur une tubulure de raccordement dans la zone d'un passage à travers une couche murale, en particulier une double paroi,
- qui comprend un manchon (36) réalisé avec un intérieur creux ; et
- qui comprend un agent d'étanchéité (32) pour l'application procurant une étanchéité contre le côté externe de la tubulure de raccordement (12) ; **caractérisé**
- **en ce que** le manchon (36) présente, à l'extrémité qui se détourne de la tubulure de raccordement (12), un filet de vis interne (42) qui correspond au filet de vis externe (40) d'un bouchon d'étanchéité (16).

5. Procédé destiné à la préparation d'un montage d'une conduite d'eau sur une tubulure de raccordement dans la zone d'un passage à travers une couche murale, en particulier une double paroi, avec un système selon les revendications 1 à 3,
- dans lequel on introduit par vissage le bouchon d'étanchéité dans la tubulure de raccordement ;
- dans lequel on procède à un contrôle de l'étanchéité de l'agencement de conduite, y compris d'une surface murale ; et
- dans lequel on applique par poussée le manchon d'étanchéité de manière hermétique sur la tubulure de raccordement et on le visse, au moins en partie, avec le bouchon d'étanchéité.

6. Procédé selon la revendication 5,
- dans lequel on construit une paroi murale, en particulier une double paroi, d'une manière telle que le manchon d'étanchéité et le bouchon d'étanchéité font saillie par rapport à une ouverture pratiquée dans la paroi murale, en particulier dans la double paroi ;
- dans lequel on élimine la portion saillante du manchon d'étanchéité de manière conjointe avec le bouchon d'étanchéité ; et
- dans lequel on introduit par vissage, au sein du manchon d'étanchéité, la conduite d'eau dans les tubulures de raccordement.

7. Procédé selon la revendication 6,
dans lequel la conduite d'eau est disposée, au moins en partie, en position adjacente dans le manchon d'étanchéité.

8. Procédé selon l'une quelconque des revendications 5 à 7,
dans lequel, on entoure au moins une partie du manchon d'étanchéité et le cas échéant une partie de la tubulure de raccordement, avec un manchon d'isolation.
